# EUROPEAN PATENT APPLICATION

(11) **EP 2 413 118 A1**
(43) Date of publication of application: **01.02.2012**
(21) Application number: 09842113.4
(22) Date of filing: 24.03.2009
(51) Int. Cl.: G01K 11/12, G01K 11/16, G01K 11/06

(54) **TEMPERATURE-TIME INDICATOR SYSTEM BASED ON IRREVERSIBLE COLOUR CHANGES, AND CORRESPONDING METHOD**

(71) Applicant: Ribate Y Asociados, S.L.U, 48160 Derio (Vizcaya) (ES)
(72) Inventor: GRANDE TELLERIA, Hans-Jurgen, E-20009 Donostia-San Cebastián (Guipúzcoa) (ES); POMPOSO ALONSO, José Adolfo, E-20009 Donostia-San Cebastián (Guipúzcoa) (ES); POZO-GONZALO, Cristina, E-20009 Donostia-San Cebastián (Guipúzcoa) (ES); VIÑUALES MARTINEZ, Ana, E-20009 Donostia-San Cebastián (Guipúzcoa) (ES)
(74) Representative: Maldonado Jordan, Julia
(86) International application number: PCT/ES2009/000161
(87) International publication number: WO 2010/109023

(57) **Abstract**

The present invention relates to a temperature-time indicator system which allows monitoring the maintenance of the cold chain in frozen or refrigerated substances based on irreversible color changes, comprising a layer with a solution of ascorbic acid and a layer with a solution of at least one base, wherein the solution of ascorbic acid does not mix with the solution of at least one base unless the temperature reaches a pre-determined threshold. The invention also relates to a method using said system.

## Description

### Field of the Invention

The present invention relates to a temperature-time indicator system or device which allows monitoring the maintenance of the cold chain in frozen or refrigerated substances. More specifically, the system is based on the irreversible appearance of color caused by mixing low toxicity components above a critical temperature, visually and directly indicating that the substance has been exposed to temperatures higher than those required for its optimal conservation. The invention also comprises a corresponding method of monitoring the maintenance of the cold chain in frozen or refrigerated substances.

### Background of the Invention

There are a number of substances on the market which during the storage, transport and/or marketing phases must be maintained at low temperatures for the purpose of preventing deterioration. The conservation, handling, transport and distribution system which assures the conservation of the substances in suitable light and temperature conditions is referred to as the "cold chain". Only the correct operation and strict compliance of said system allow assuring that a substance is in optimal conditions at the time of being used or consumed. Sectors as diverse as the food, pharmaceutical or photographic sectors include products with perishable substances, as in the case of frozen and/or refrigerated foods, vaccines or photographic films. For example, the MMR vaccine can be rendered completely ineffective if the cold chain is interrupted and the temperature reaches 37°C. Foodstuffs such as cattle meat or fish can be preserved one year or six months, respectively, if they are kept frozen at temperatures of some -18°C, while, if they are kept frozen between 0°C and 8°C, their preservation does not go beyond 2-3 days. Therefore, it is very useful to have systems which allow for the detection of whether, at a certain point, the cold chain has been broken, and even for how long the substance has been exposed to a temperature higher than the preservation temperature.

Different systems useful as temperature indicators for the control of the breach of the cold chain have been described, most of which base their operation on physical or chemical processes which cause that a color irreversibly appear, indicating visually and directly that the critical temperature has been exceeded. Thus, for instance, there are in the state of the art devices based on the melting of materials placed on an absorbent colored material which becomes visible after said melting process, or on colored liquids which, after melting, soak a paper (documents US3002385, US3702077, US6786638B1, US4120818). The dissolution of dyes or the diffusion thereof through polymeric layers is one of the most widely used techniques in the development of this kind of indicators (documents US6514462B1, US5057434, US5476792), although in other instances other strategies are chosen, such as the one described in patent US6030118, where the used material which can melt contains disperse magnetic particles, in such a manner that, upon melting, it allows their migration to certain previously magnetized, solid bodies. Other systems are based on the expansion-contraction phenomena which take place during the solidification-melting of liquids. These effects are taken advantage of in different manners, such as the displacement of a piston (document US7415939B2) or the rupture point of the capsules which are visible through a transparent viewing device (document US5460117).

Several systems have been described with respect to indicators based on chemical reactions. Patent US7290925B1 describes an indicator system based on redox reactions between iron salts, specifically K₄Fe(CN)₆ and FeCl₃, which lead to the formation of strongly blue colored complexes. Solutions of said salts in a mixture of alginate/glycerol/water are initially provided, separated by a wax-type material which melts at a certain temperature allowing the mixture of both. In other cases, a meltable material is not used as a barrier for separating the reagents, but a porous material is used through which the substances are diffused at a rate that increases with temperature. This is the strategy followed, for example, in patent US2008/0009067A1, which in an illustrative example uses as a separation a layer of polyacrylate having a certain thickness and as reagents it uses a chelating agent (2,2'-dipyridyl) and FeCl₃ which upon coming into contact with one another lead to the formation of a red colored complex. In this case, since it is a porous separation layer, the system would be activated from the start, and its handling at room temperature is not possible. Systems in which the active substances are microencapsulated, being released after the rupture of the microcapsules under certain temperature conditions (documents US4729671, US4601588), have also been described. Systems of this type based on colors or on the mixture of reagents have the drawback that the coloring phenomenon occurs immediately when the components come into contact with one another. This can complicate the control of the coloring rate as well as the handling during the manufacturing process. On the other hand, in most of the aforementioned documents the preparation methods are complex and require the use of a number of components. Furthermore, in the systems described until now a factor of vital importance, such as the toxicity of the components used, has not been considered. This is an aspect to be taken into account considering that indicators of this type are used often in containers which contain foods or medicinal products, such that an accidental leak of the materials contained therein could have negative consequences for the substance.

Therefore there is a need to design systems which, on one hand, involve simple and economic materials and manufacturing processes and, on the other, are based on components having low or no toxicity.

### Summary of the Invention

The present invention relates to an irreversible temperature-time indicator system or device for monitoring the cold chain in frozen or refrigerated substances, based on low toxicity and easy-to-calibrate components manufactured by means of simple, low-cost methods, and adaptable to a wide range of detection temperatures. The system is based on a layer comprising a solution of ascorbic acid and on a layer comprising a solution of at least one base, wherein the solution of ascorbic acid does not mix with the solution of at least one base unless the temperature reaches a pre-determined threshold. The invention also comprises a method using said system.

### Brief Description of the Drawings

The present invention will be better understood in reference to the following drawings which illustrate preferred embodiments of the invention, which are provided by way of example and should not be considered to be limiting of the invention in any way.
Figure 1 shows a detail of the system according to an embodiment of the present invention.
Figure 2 shows an operating diagram of the system shown in Figure 1.
Figure 3 shows an operating diagram according to another embodiment of the present invention.
Figure 4 shows an example of the color developed according to the time and temperature of a system according to the present invention.

### Detailed Description of the Invention

The present invention relates to a temperature-time indicator system or device for frozen or refrigerated substances having at least one layer comprising a solution of ascorbic acid or vitamin C and at least one layer comprising a solution of at least one base, in which the system starts to become gradually colored by means of a chemical reaction according to the exposure time and temperature.

The operating principle of the system of the present invention is based on the decomposition reaction of ascorbic acid in alkaline medium, being irreversibly converted into 2,3-diketogulonic acid, a reducing agent stronger than ascorbic acid, providing an orange-red color to the solution according to the following reaction scheme.

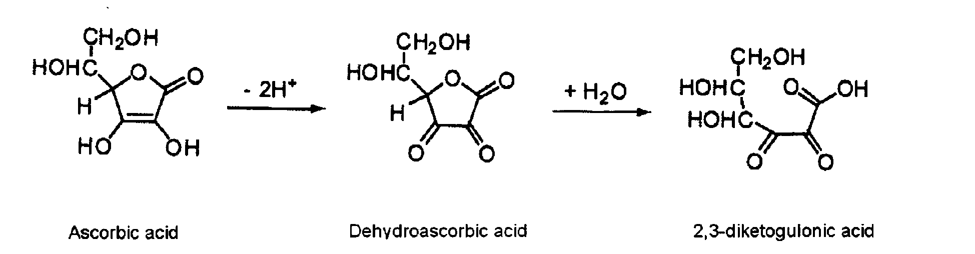

Since the conversion does not occur immediately, complete control of the coloring according to the time and temperature is possible, being an ideal system for manufacturing temperature-time indicators such as that described in the present invention.

In a preferred embodiment of the present invention, the simplest assembly of the present system consists of separately freezing the aqueous solution of ascorbic acid and the aqueous solution of the base. The concentration of the solutions used for suitable operation ranges between 3% and 10% by weight for ascorbic acid and between 1.5% and 3.5% by weight for bases such as sodium or potassium hydroxide, therefore being diluted solutions in the latter case. In turn, as is known by a person skilled in the art, the use of weaker bases, such as acetates or certain amino acids, is possible even though they require higher concentrations.

Once frozen, the layers are arranged one on top of the other in a capsule of plastic or another transparent material, for example PMMA, PC or PET type, which is incorporated in the container which contains the substance the temperature of which is to be controlled. While the substance remains frozen, the indicator will show a white-colorless aspect. In the event that the temperature increases and exceeds 0°C, the layers will start to melt, allowing the mixture of both solutions and therefore the start of the irreversible conversion reaction of vitamin C into 2,3-diketogulonic acid, which will translate into a gradual coloring of the present system from yellow to red, passing through orange. This allows visually and directly detecting that the system has exceeded the critical temperature and that the cold chain has therefore been broken.

In addition, the variation of parameters such as the initial concentration of the solutions of ascorbic acid and the base or the thickness of the frozen layers, allows establishing excellent control over the coloring rate at a specific temperature. The prior calibration of the system of the present invention offers the possibility of designing a color scale for identifying the time during which the substance has been subjected to a pre-determined temperature.

The described system is applicable for detecting the breaking of the cold chain in frozen substances because the components come into contact due to the melting of ice above 0°C. In the case of refrigerated substances which must be maintained between 0 ° C and 8°C, the strategy to be followed is identical, replacing water with another suitable solvent with a melting point above 8°C. A possible solvent suitable for said application is dimethylsulfoxide (DMSO), classified as a very low toxicity, basically odorless solvent the melting temperature of which is between 16°C and 18°C. The addition of a small amount of water (between 1 and 1.5% by weight with respect to DMSO) allows, together with the presence of solute, reducing said melting point to a temperature of about 10°C[..1], ideal for the present application.

Due to the insolubility of the sodium hydroxide in DMSO, it must be added in these cases in solid state to the solution the moment prior to freezing or once frozen. Specifically, it must be sodium hydroxide powder, which facilitates dissolution in the small percentage of water contained in the mixture.

In an alternative embodiment, an intermediate layer of ice or another frozen solvent (for example DMSO, depending on the use to be given to the system, such as for frozen or refrigerated substances) is included, such that the mixture of the components and therefore the color change is delayed.

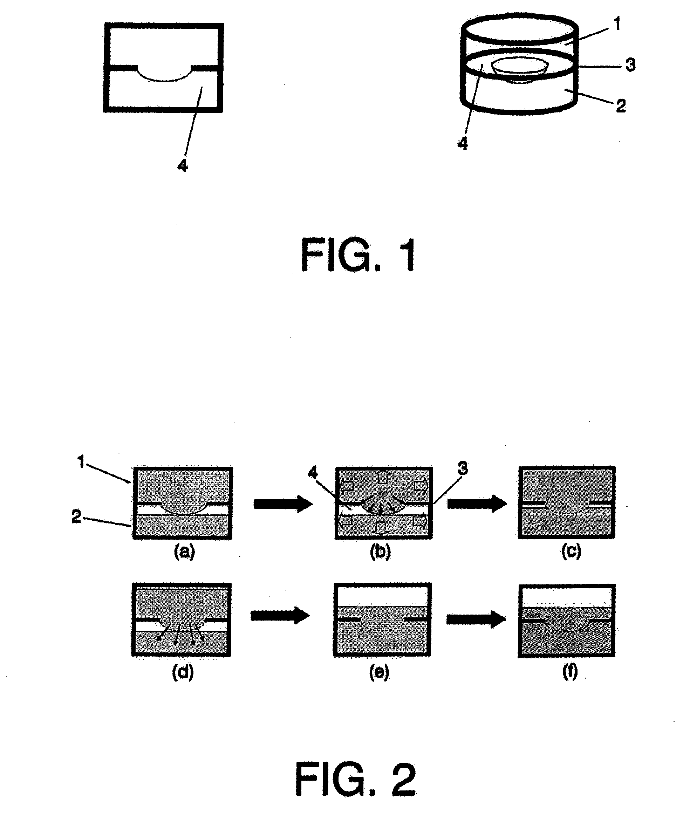

In another preferred embodiment shown in Figure 1, the system of the present invention further comprises a solid intermediate layer that isolates the solutions such that the system can be stored and handled at room temperature prior to use. According to this embodiment, the system consists of an upper layer 1 comprising the aqueous solution of ascorbic acid and a lower layer 2 comprising the aqueous solution of a base (or vice versa) in a capsule of transparent plastic (or another also transparent material) with an intermediate layer 3 of the same material which keeps both solutions separated. The upper portion of the capsule in which layer 1 is located is filled between 95% and 99% of the total volume with one of the solutions, whereas the lower portion in which layer 2 is located is filled up to a maximum of 80% with the complementary solution. As observed in Figure 1, the intermediate layer 3 has a central portion 4 a substantially semispherical shape weaker than the rest of the capsule. In the preferred embodiment, the central portion 4 is of the same material as the rest of the walls of the capsule, but it has a considerably smaller thickness. In an alternative embodiment, the central portion 4 is of a material weaker than the rest of the walls of the capsule.

The operation of the system according to that embodiment is shown in Figure 2. This configuration isolates the respective solutions comprised in layers 1 and 2 (Figure 2a). Once the substance the temperature of which is to be controlled has been incorporated, the freezing process is performed such that both the substance and the indicator system are subjected to said process simultaneously. The conversion of water into ice causes an expansion which involves an increase in the volume of up to 9%, which causes pressure on the walls of the capsule (Figure 2b), causing the rupture of the central semispherical portion 4 of the intermediate layer 3 as it is the area of the smallest thickness (Figure 2c). The system is thus activated and frozen, but it remains colorless as long as the temperature is not raised again above the freezing temperature. If at any point the temperature increases above 0°C, the ice will start to melt, the solutions coming into contact through the fractured semisphere (Figures 2d and 2e). Depending on the temperature and the exposure time, the system will start to become gradually colored, initially acquiring a yellow tone that will evolve to red, passing through orange (Figure 2f).

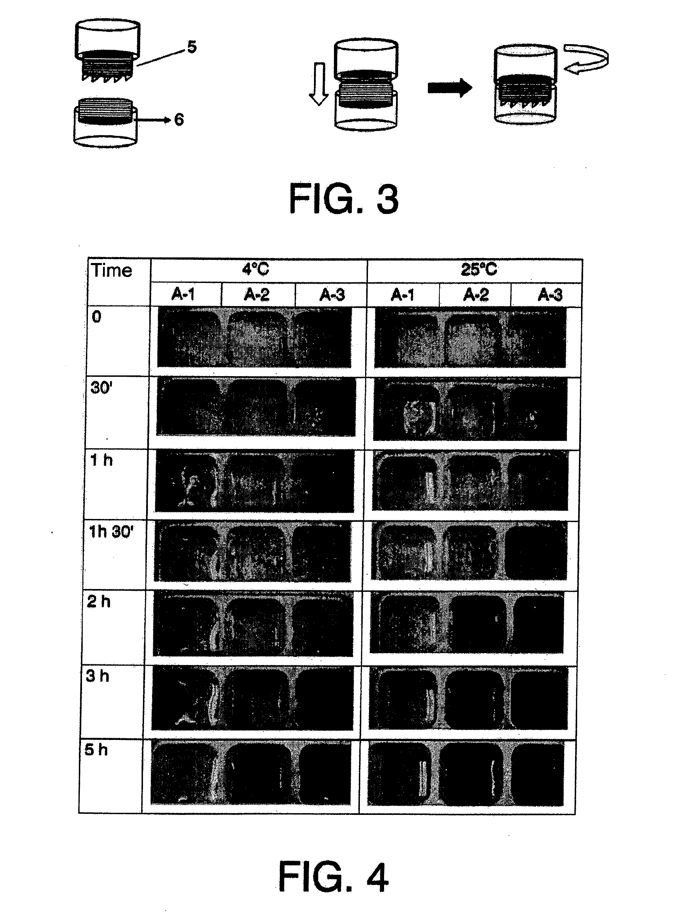

In another preferred embodiment of the present invention shown in Figure 3, the system consists of two independent capsules each of which contains one of the aforementioned solutions. Said capsules incorporate a threading system 5 which allows fitting one in the other. The complete rotation of the threading 5 performed by the manufacturer after the freezing process will cause the perforation of an intermediate sheet 6, for example of a plastic or cardboard type material, rendering the system activated and allowing the mixture of the components in the case of the melting of the solvent.

The present invention also comprises a method for monitoring the cold chain of frozen or refrigerated substances, which comprises arranging in contact with the frozen or refrigerated substance at hand a layer comprising a white or colorless solution of ascorbic acid and a layer comprising a white or colorless solution of at least one base, wherein the solution of ascorbic acid does not mix with the solution of at least one base unless the temperature reaches a pre-determined threshold, such that the mixture of both solutions indicates, by means of the color change of the resulting solution to the orange-red scale, that said threshold has been exceeded, at a higher temperature and for a longer time the closer the color of the resulting solution is to red.

The present invention thus described therefore provides a simple, low-cost and easy-to-manufacture solution to the problems mentioned in the prior art. More specifically, the present invention provides a system of only two components which uses compounds belonging to the list of elements authorized in the food field, such as for example ascorbic acid (E-300) and a hydroxide (E -524 or E -525) or sodium acetate (E -262). The use of said components provides the low toxicity thereof as added value. Furthermore, the system according to the present invention allows knowing the exposure time at a given temperature within a broad range of temperatures, being very versatile for the final application thereof.

### Example

An aqueous solution of ascorbic acid at 4.8% by weight (solution A) and three solutions of sodium hydroxide of concentrations at 1.9% by weight (solution 1), at 3.1% by weight (solution 2) and at 3.5% by weight (solution 3) were prepared. 2 mL of each solution were placed in separate plastic containers, with a bottom having a surface area of 6.2 cm², such that the solution formed a layer 3.2 mm thick. The solutions were frozen at -21°C for 12 hours. A frozen layer of solution 1, solution 2 or solution 3 was then placed on each frozen layer of solution A. The system, which was thus prepared to operate, was kept for 24 hours at -21°C. The containers were then placed at 4°C and the subsequent evolution thereof was observed. Another 3 samples were similarly prepared, subjecting them to a temperature of 25°C after having remained for 24 hours at -21°C. Figure 4 shows the results obtained, indicating the coloring observed in each case according to the time elapsed.

The preceding description must not be considered as limiting but rather as being descriptive of the present invention, and it is intended that these and other modifications of the described embodiments that persons skilled in the art may conceive are comprised within the scope of the invention defined by the attached claims.

## Claims

1. A temperature-time indicator system for monitoring the cold chain of frozen or refrigerated substances based on irreversible color changes, comprising a layer comprising a solution of ascorbic acid and a layer comprising a solution of at least one base, wherein the solution of ascorbic acid does not mix with the solution of at least one base unless the temperature reaches a pre-determined threshold.

2. The temperature-time indicator system according to claim 1, wherein the solvent of the solution of ascorbic acid and of the solution of the at least one base is water.

3. The temperature-time indicator system according to claim 1, wherein the solvent of the solution of ascorbic acid and of the solution of the at least one base is a solvent with a melting point above 0°C.

4. The temperature-time indicator system according to claim 3, wherein the solvent of the solution of ascorbic acid and of the solution of the at least one base is a solvent with a melting point above 8°C.

5. The temperature-time indicator system according to claim 4, wherein the solvent of the solution of ascorbic acid and of the solution of the at least one base is a mixture of dimethylsulfoxide (DMSO) in water.

6. The temperature-time indicator system according to any of the preceding claims, wherein the concentration of ascorbic acid is comprised between 3% and 10% by weight.

7. The temperature-time indicator system according to any of the preceding claims, wherein the at least one base is a hydroxide selected from sodium hydroxide and potassium hydroxide.

8. The temperature-time indicator system according to claim 7, wherein the concentration of the hydroxide is comprised between 1.5% and 3.5% by weight.

9. The temperature-time indicator system according to any of the preceding claims, wherein the layer comprising a solution of ascorbic acid and the layer comprising a solution of at least one base are located inside a transparent capsule.

10. The temperature-time indicator system according to claim 9, wherein said transparent capsule is of a plastic material.

11. The temperature-time indicator system according to any of the preceding claims, wherein the layer comprising a solution of ascorbic acid and the layer comprising a solution of at least one base are frozen.

12. The temperature-time indicator system according to any of the preceding claims, wherein the layer comprising a solution of ascorbic acid and the layer comprising a solution of at least one base are separated by an intermediate layer of solvent.

13. The temperature-time indicator system according to claim 12, wherein the solvent of the intermediate layer is ice.

14. The temperature-time indicator system according to claim 12, wherein the solvent of the intermediate layer is a mixture of dimethylsulfoxide (DMSO) and water.

15. The temperature-time indicator system according to any of claims 1 to 11, further comprising an intermediate layer (3) between the layer (1 or 2) comprising a solution of ascorbic acid and the layer (2 or 1) comprising a solution of at least one base, which intermediate layer (3) is at least at its ends of the same material as the capsule (7) and has a weaker central portion (4) susceptible to rupture by means of increasing the volume of the solution of the ascorbic acid and of the solution of at least one base.

16. The temperature-time indicator system according to claim 15, wherein the central portion (4) is semi-spherical.

17. The temperature-time indicator system according to claim 15 or 16, wherein the central portion (4) is of the same material as the rest of the capsule (7) but with a smaller thickness.

18. The temperature-time indicator system according to claim 15 or 16, wherein the central portion (4) is of a different material than the rest of the intermediate layer (3).

19. The temperature-time indicator system according to any of claims 1 to 8, wherein the layer comprising a solution of ascorbic acid and the layer comprising a solution of at least one base are located, respectively, in different capsules (8, 9) fitted together by means of a threading (5) causing the perforation of an intermediate sheet (6), allowing the contact of said layers.

20. The temperature-time indicator system according to claim 19, wherein the intermediate sheet (6) is of a plastic material.

21. The temperature-time indicator system according to claim 19, wherein the intermediate sheet (6) is of cardboard.

22. A method for monitoring the cold chain of frozen or refrigerated substances, which comprises arranging in contact with the frozen or refrigerated substance at hand a layer comprising a white or colorless solution of ascorbic acid and a layer comprising a white or colorless solution of at least one base, such that the solution of ascorbic acid does not mix with the solution of at least one base unless the temperature reaches a pre-determined threshold, such that the mixture of both solutions indicates, by means of the color change of the resulting solution to the orange-red scale that said threshold has been exceeded, at a higher temperature and for a longer time the closer the color of the resulting solution is to red.
